# EUROPÄISCHE PATENTSCHRIFT

(11) **EP 3 165 976 B1**
(45) Veröffentlichungstag und Bekanntmachung des Hinweises auf die Patenterteilung: **01.08.2018**
(21) Anmeldenummer: 16191742.2
(22) Anmeldetag: 30.09.2016
(51) Int. Cl.: G05B 19/042

(54) **BEDIENVORRICHTUNG UND -VERFAHREN FÜR SPINNEREIVORBEREITUNGSMASCHINEN**
OPERATING DEVICE AND METHOD FOR A SPINNING PREPARATION MACHINE
DISPOSITIF DE COMMANDE ET PROCÉDÉ POUR MACHINES DE PRÉPARATION À LA FILATURE

(30) Priorität: 06.11.2015 DE 102015119179
(43) Veröffentlichungstag der Anmeldung: 10.05.2017
(73) Patentinhaber: Trützschler GmbH & Co. KG, 41199 Mönchengladbach (DE)
(72) Erfinder: Breuers, Frank, 41169 Mönchengladbach (DE); Dreck, Martin, 41812 Erkelenz (DE); Hartung, Reinhard, 41065 Mönchengladbach (DE)

(56) Entgegenhaltungen:
- WO-A1-2005/031485
- DE-A1- 10 055 025
- DE-A1-102014 014 752

## Beschreibung

Die Erfindung betrifft ein Bedienkonzept für Spinnereivorbereitungsmaschinen. Insbesondere betrifft die Erfindung eine dafür vorgesehene Bedienvorrichtung und ein dafür vorgesehenes Bedienverfahren.

Herkömmliche Bedienkonzepte für Spinnereivorbereitungsmaschinen sehen vor, dass jede Maschine über eine eigene Bedienvorrichtung verfügt. Dies bedingt ein Bedienverfahren, das konzipiert ist, dass bei jeder Bedienvorrichtung jeweils nur eine einzige Spinnereivorbereitungsmaschine eingestellt bzw. angesteuert werden kann. Der Nachteil ist, dass sich ein Benutzer, um in einer Verarbeitungskette hintereinander angeordnete oder auch parallel miteinander arbeitende Maschinen einstellen zu können, zu jeder Maschine bewegen muss. Dies bedingt enorme Laufwege und damit einen ziemlich großen Zeitaufwand. Ferner müssen Einstellparameter, die vielleicht an mehreren Maschinen gleich eingestellt werden sollen, an jeder Maschine einzeln eingegeben bzw. gesetzt werden. Dies führt zu einer Fehlerquelle, da die bedienende Person darauf achten muss, dass sie an jeder Maschine dieselben Werte einträgt bzw. einstellt.

Aus der DE 100 55 025 A1 ist ein Bedienkonzept bekannt, bei dem eine zentrale Bedien- und Anzeigestation über ein Kommunikationsnetzwerk mit mehreren Maschinen gekoppelt ist. Über diese Station können zentral Einstell-, Parametrier- und Vorgabearbeiten durchgeführt werden. Zusätzlich verfügt jede Maschine über ein jeweiliges Terminal, um für einen "Produktionsbetrieb" notwendige Eingaben vorzunehmen. Daraus entsteht der Nachteil, dass trotz einer zentralen Bedienstation weiterhin vor Ort an den einzelnen Maschinen Einstellungen vorgenommen werden müssen, verbunden mit den eingangs genannten Nachteilen.

Aufgabe der Erfindung ist es, diesen Nachteilen zu begegnen.

Diese Aufgabe wird durch den Gegenstand der Ansprüche 1, 10 und 11 gelöst. Vorteilhafte Weiterbildungen der Erfindung sind in den Unteransprüchen angegeben.

Erfindungsgemäß ist ein Verfahren zum Betreiben einer Anzeige- und Bedienvorrichtung vorgesehen, die mit zumindest zwei Spinnereivorbereitungsmaschinen gekoppelt ist. Das Verfahren umfasst einen Schritt des Darstellens von Maschinenanzeigeabschnitten auf einem Anzeigeabschnitt der Vorrichtung in einem Nichthervorhebezustand. Jeder dieser Maschinenanzeigeabschnitte repräsentiert jeweils eine der mit der Anzeige- und Bedienvorrichtung gekoppelten Spinnereivorbereitungsmaschinen. Jeder Maschinenanzeigeabschnitt kann aus einem oder mehreren Anzeigeelementen wie Symbolen bestehen. Das Verfahren sieht zudem vor, es zu ermöglichen, mittels eines Bedienabschnitts der Vorrichtung einen dieser Maschinenanzeigeabschnitte auszuwählen. Der Bedienabschnitt kann dafür eine gesonderte Taste oder auch auf dem Anzeigeabschnitt selbst ein softwareseitiges Anzeigeelement wie einen Knopf umfassen. Bei Auswahl solch eines Maschinenanzeigeabschnitts sieht das Verfahren vor, dass der Maschinenanzeigeabschnitt, der die ausgewählte Spinnereivorbereitungsmaschine repräsentiert, in einem ersten Hervorhebezustand dargestellt wird. Dieser unterscheidet sich vom vorgenannten Nichthervorhebezustand optisch. Demzufolge wird/werden die nicht ausgewählte Spinnereivorbereitungsmaschine/n im Nichthervorhebezustand dargestellt. Damit ist die ausgewählte Spinnereivorbereitungsmaschine auf der Anzeige optisch von der/nen zu unterscheiden, die aktuell nicht ausgewählt ist/sind, was die Bedienung vereinfacht. Zudem wird im Rahmen des Verfahrens zumindest ein erster Aktionsauswahlabschnitt dargestellt, der zumindest eine zugeordnete erste Aktion repräsentiert, die mittels des Bedienabschnitts bei der ausgewählten Spinnereivorbereitungsmaschine ausführbar ist. D. h. dieser Aktionsauswahlabschnitt kann sich optisch je nach ausgewählter Spinnereivorbereitungsmaschine ändern. Eine erste Aktion könnte beispielsweise eine Dateneingabe sein. Wird bei solch einem Aktionsauswahlabschnitt mittels des Bedienabschnitts eine erste Aktion ausgewählt, sieht das Verfahren einen Schritt des Darstellens eines zugehörigen, ersten Aktionsanzeigeabschnitts vor. Dessen Bedienen mittels des Bedienabschnitts bewirkt das Ausführen der zugeordneten ersten Aktion bei der ausgewählten Spinnereivorbereitungsmaschine. Solch eine Aktion kann das Verändern von Betriebsparametern beinhalten. Das Bewirken der Parameteränderung an der ausgewählten Spinnereivorbereitungsmaschine kann mittels Bestätigens einer Dateneingabe erfolgen. Zudem sieht das Verfahren vor, zumindest einen zweiten Aktionsauswahlabschnitt darzustellen, der zumindest eine zugeordnete zweite Aktion repräsentiert. Diese ist entgegen dem vorgenannten ersten Aktionsanzeigeabschnitt eine Aktion, die bei allen gekoppelten Spinnereivorbereitungsmaschinen ausführbar ist. Bei Auswahl einer der zumindest einen zweiten Aktion mittels des Bedienabschnitts wird im Rahmen des Verfahrens ein zweiter Aktionsanzeigeabschnitt dargestellt. Dessen Bedienen mittels des Bedienabschnitts bewirkt dementsprechend das Ausführen der zugeordneten zweiten Aktion bei allen gekoppelten Spinnereivorbereitungsmaschinen. Solch eine Aktion kann beispielsweise die Auswahl der Art des zu verarbeitenden Faserbandmaterials, die Wahl einer Anfangszeit und dergleichen beinhalten. D. h. trotz etwaig ausgewählter Spinnereivorbereitungsmaschine ist es weiterhin möglich, alle gekoppelten Spinnereivorbereitungsmaschinen gleichzeitig ansprechen zu können, und dies ohne die Notwendigkeit, alle gekoppelten Spinnereivorbereitungsmaschinen vorab auswählen zu müssen.

Vorzugsweise sieht das Verfahren ferner einen Schritt eines initialen automatischen Auswählen eines der ersten Maschinenanzeigeabschnitte vor. D. h. es ist immer eine Spinnereivorbereitungsmaschine ausgewählt. Somit wird der Zustand vermieden, in dem keine Spinnereivorbereitungsmaschine ausgewählt ist, was die Betriebssicherheit verbessert.

Beide Verfahren können bei Auswahl eines des zumindest einen zweiten Aktionsauswahlabschnitts mittels des Bedienabschnitts einen Schritt des Darstellens aller Maschinenanzeigeabschnitte gemäß einem zweiten Hervorhebezustand umfassen. Dieser unterscheidet sich optisch sowohl vom ersten Hervorhebezustand als auch vom Nichthervorhebezustand. So kann dem Benutzer signalisiert werden, dass zwar eine Spinnereivorbereitungsmaschine ausgewählt ist, die aktuelle Aktion aber alle Spinnereivorbereitungsmaschinen betrifft. Es ist mithin kein gesonderter Hinweis notwendig. Die Bedienung erfolgt intuitiv und ist vereinfacht. Nach Beenden des Bedienens des ausgewählten zweiten Aktionsauswahlabschnitts wird im Rahmen des Verfahrens wieder zur Darstellung der Maschinenanzeigeabschnitte unmittelbar vor dem Auswählen des zweiten Aktionsauswahlabschnitts zurückgekehrt. Dies signalisiert, dass die Aktion alle Spinnereivorbereitungsmaschinen betreffend beendet ist. Dieses Zurückkehren kann zeitversetzt erfolgen, sodass das Hervorheben aller Maschinenanzeigeabschnitte noch eine Weile besteht, auch wenn die betreffende Aktion bereits ausgeführt worden ist.

Bei allen vorgenannten Verfahren umfassen die ersten Anzeigeabschnitte vorzugsweise jeweils ein Abbild der jeweils repräsentierten Spinnereivorbereitungsmaschine. Der vorgenannte erste Hervorhebezustand ist dabei ein stilistisches Abbild der jeweiligen Spinnereimaschine. Im Nichthervorhebezustand ist das Abbild der jeweiligen Spinnereivorbereitungsmaschine Ausgegraut und/oder zumindest teiltransparent, rückt also optisch in den Hintergrund. Dies macht das Erfassen der ausgewählten Spinnereivorbereitungsmaschine durch einen Benutzer besonders einfach.

Die Maschinenanzeigeabschnitte sind bei all den vorgenannten Verfahren vorzugsweise in einem mittigen Bereich des Anzeigeabschnitts der Maschine angeordnet. Sie bilden somit optisch den zentralen Teil der Bedienung. Dies dient dem Zweck, dem Benutzer deutlich kenntlich zu machen, dass die Bedienung die dargestellte/n Spinnereivorbereitungsmaschine/n betrifft.

Vorzugsweise überdeckt der jeweils dargestellte erste und/oder zweite Aktionsanzeigeabschnitt die Maschinenanzeigeabschnitte ganz oder teilweise. Dadurch wird der Fokus des Benutzers auf ebendiese/n Aktionsanzeigeabschnitt/e gelenkt.

Im Rahmen der vorgenannten Verfahren kann vorgesehen sein, dass der zumindest eine erste und/oder zweite Aktionsauswahlabschnitt oberhalb oder unterhalb der Maschinenanzeigeabschnitte angeordnet ist bzw. sind. Dies trennt den Bereich der Anzeige der ausgewählten Spinnereivorbereitungsmaschine optisch von dem Bereich, in dem Aktionen anstoßbar sind. Dies dient der Bedienbarkeit. Die Anordnung kann selbstredend in jeder anderen Konstellation wie rechts- und linksseitig der Maschinenanzeigeabschnitte realisiert sein.

Jedes der vorgenannten Verfahren kann mehrere Berechtigungsebenen aufweisen. Dabei weist das Verfahren einen Schritt auf, es einem Benutzer zu ermöglichen, mittels der Vorrichtung eine Berechtigungsebene einstellen zu können. Vor dem Schritt des Anzeigens des ersten oder zweiten Aktionsauswahlanzeigeabschnitts weist das Verfahren ferner einen Schritt des Auswählens ausführbarer erster und/oder zweiter Aktionen auf Basis der eingestellten Berechtigungsebene auf. Schließlich gibt es noch einen Schritt des Deaktivierens oder Unterdrückens der Anzeige derjenigen Aktionsanzeigeabschnitte, deren zugeordnete erste bzw. zweite Aktionen der eingestellten Berechtigungsebene nicht ausführbar sind. Damit können dem aktuellen Benutzer auf Basis der aktuell eingestellten Berechtigungsebene nur die Aktionen als auswählbar angezeigt werden, die ausgeführt werden dürfen. Damit können Bedienfehler minimiert und Bedienungen von nicht ausgebildetem Personal unterbunden werden, was die Betriebssicherheit erhöht.

Jedes der vorgenannten Verfahren kann computerimplementiert sein. D. h. es beinhaltet Befehle, die eine informationsverarbeitende Vorrichtung wie einen Computer oder einen Prozessor bei einem Embedded System dazu bringen, das jeweilige Verfahren auszuführen und damit zu realisieren. D. h. die Erfindung ist nicht darauf beschränkt, mittels eines Computers realisiert werden zu müssen.

Ferner ist ein computerlesbares Medium vorgesehen, das durch einen Prozessor ausführbare Befehle aufweist, um einem Prozessor die Ausführung eines der vorgenannten zu ermöglichen. Entweder enthält das Medium die Befehle zum direkten Ausführen des Verfahrens, oder aber es sind Instruktionen zum Installieren auf einem System mit Prozessor enthalten, und die Installation beinhaltet diese ausführbaren Befehle. D. h. das Verfahren kann beispielsweise im Rahmen eines Upgrades zur Verfügung gestellt werden; eine neue Umgebung wie eine neue informationsverarbeitende Vorrichtung ist nicht zwangsläufig erforderlich.

Die Erfindung sieht ferner ein System vor, das zumindest zwei Spinnereivorbereitungsmaschinen umfasst. Mit diesen ist eine Anzeige- und Bedienvorrichtung gekoppelt. Diese wiederum ist gestaltet, eine Bedienung der gekoppelten Spinnereivorbereitungsmaschinen zu ermöglichen. Ferner umfasst das System eine Steuerungseinrichtung. Diese ist gestaltet, die Anzeige- und Bedienvorrichtung gemäß einem der vorgenannten Verfahren zu betreiben. Die Steuerungseinrichtung kann beispielsweise eine für beide Spinnereivorbereitungsmaschinen zuständige Steuerung sein.

Weitere Merkmale und Vorteile der Erfindung ergeben sich aus der nachfolgenden Beschreibung bevorzugter Ausführungsformen. Es zeigen:
- Figur 1: eine Bedien- und Anzeigevorrichtung mit einem Anzeigeinhalt in verschiedenen Abwandlungen,
- Figur 2: eine Abwandlung des Anzeigeinhalts von Figur 1c,
- Figur 3: die Vorrichtung von Figur 1 in einem dritten Anzeigezustand,
- Figur 4: die Vorrichtung von Figur 1 in einem vierten Anzeigezustand,
- Figur 5: die Vorrichtung von Figur 1 in einem fünften Anzeigezustand und zwei Abwandlungen,
- Figur 6: die Vorrichtung von Figur 1 in einem sechsten Anzeigezustand,
- Figur 7: eine Abwandlung des Bildschirms von Figur 6,
- Figur 8: die Vorrichtung von Figur 1 in einem achten Anzeigezustand,
- Figur 9: die Vorrichtung von Figur 1 in einem neunten Anzeigezustand,
- Figur 10: die Vorrichtung von Figur 1 in verschiedenen Anzeigezuständen,
- Figur 11: die Vorrichtung von Figur 1 in verschiedenen Anzeigezuständen,
- Figur 12: die Vorrichtung von Figur 1 in einem zehnten Anzeigezustand,
- Figur 13: die Vorrichtung von Figur 1 in einem elften Anzeigezustand,
- Figur 14: die Vorrichtung von Figur 1 in einem zwölften Anzeigezustand und
- Figur 15: die Vorrichtung von Figur 1 in einem dreizehnten Anzeigezustand.

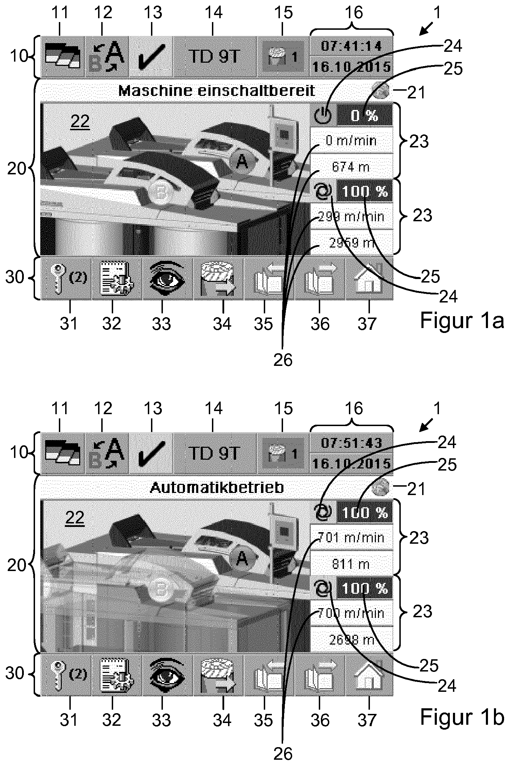

Figur 1a zeigt eine exemplarisch einen berührungssensitiven Bildschirm aufweisende Bedien- und Anzeigevorrichtung 1 in einem ersten Anzeigezustand. Der Bildschirm 1 bildet mithin zumindest einen Teil eines Bedienterminals. Der Bildschirm 1 ist dreigeteilt und weist drei Anzeigeabschnitte 10, 20 und 30 auf.

Der Anzeigeabschnitt 20 weist einen hier rechteckigen Anzeigeabschnitt 22 auf. Dieser dient der Anzeige der mit dem Bildschirm 1 gekoppelten Spinnereivorbereitungsmaschinen. Als gekoppelte Spinnereivorbereitungsmaschinen sind beispielhaft zwei Strecken dargestellt.

Die Kopplung erfolgt üblicherweise über einen Prozessor, der ein entsprechendes Programm zum Ansteuern des Bildschirms 1 ausführt. Der Prozessor ist vorzugsweise über eine Steuerungseinrichtung mit den Spinnereivorbereitungsmaschinen gekoppelt. Der Begriff "Steuerungseinrichtung" bedeutet, dass es sich körperlich um eine oder mehrere Steuerschaltungen handeln kann.

Die Darstellung der Strecken erfolgt im gezeigten Beispiel dreidimensional und zeigt die beiden Strecken perspektivisch hintereinander. Ferner ist vor der Haube der jeweiligen Strecke, die das zugehörige, darunter angeordnete und nicht sichtbare Streckwerk abdeckt, ein Kreis mit einem darin angeordneten Buchstaben A bzw. B dargestellt. Das "B" ist dabei in einem Nichthervorhebezustand ausgegraut bzw. deaktiviert dargestellt, wohingegen das "A" in einem ersten Hervorhebezustand schwarz und damit deutlich lesbar dargestellt ist. Diese zwei Buchstaben repräsentieren die jeweils zugehörige Strecke. Das schlecht lesbare "B" signalisiert einem Benutzer, dass die hier optisch vorne angeordnete Strecke nicht ausgewählt ist, aufgrund des gut lesbaren "A" wohl aber die dahinter dargestellte Strecke.

Der Anzeigeabschnitt 20 weist ferner hier oberseitig beispielhaft eine Informationszeile 21 auf. Diese dient der Anzeige des Betriebszustands bzw. der aktuellen Betriebseinstellung der hier ausgewählten Strecke A. Im gezeigten Beispiel wird der Benutzer darüber informiert, dass die Strecke A einschaltbereit ist.

Hier rechtsseitig des Anzeigeabschnitts 22 schließen sich hier zwei Werteanzeigeabschnitte 23 an. Diese sind vertikal übereinander angeordnet und stellen Werte bzw. Zustände der im Anzeigeabschnitt 22 horizontal daneben dargestellten Strecken an. D. h. die drei Zeilen des oberen Anzeigeabschnitts 23 betreffen die Strecke A, wohingegen der untere Anzeigeabschnitt 23 die Strecke B betrifft. Somit ist eine einfache und intuitive Zuordnung der Werte zur jeweiligen Strecke möglich.

Beide Anzeigeabschnitte 23 sind vom Aufbau her vorteilhafterweise gleichartig aufgebaut. In der oberen Zeile links befindet sich symbolhaft eine Statusanzeige 24. In der oberen Statusanzeige 24 wird der Ausschaltzustand der Strecke A signalisiert, wohingegen das an der entsprechend analogen Stelle angeordnete Symbol in der unteren Statusanzeige 24 den Einschaltzustand der Strecke B signalisiert. Rechtsseitig der jeweiligen Statusanzeige 24 befindet sich jeweils eine Nutzeffektanzeige 25, die die Effizienz der jeweiligen Strecke A, B als Prozentwert anzeigt. Bei der Strecke A beträgt sie 0%, und bei der Strecke B 100%. Darunter ist jeweils in einem Werteanzeigeabschnitt 26 die aktuelle Faserband-Liefergeschwindigkeit der jeweiligen Strecke dargestellt, also 0 m/min bzw. 299 m/min. Wiederum darunter ist in einem anderen, jeweiligen Werteanzeigeabschnitt 26 die Länge des vorzugsweise seit dem letzten Kannenwechsel durchgelaufenen oder noch in den aktuell zu füllenden Ablagebehälter passenden Faserbands dargestellt, also 674 m bzw. 2.959 m.

Vorzugsweise sind die Zustandsanzeigen 24 als Bedienknöpfe ausgebildet und ermöglichen so, mittels Anklickens die zugehörige Strecke A, B ein- bzw. ausschalten zu können.

Der Anzeigeabschnitt 10 ist ebenfalls beispielhaft rechteckförmig und beinhaltet exemplarisch sechs Elemente 11 - 16.

Das Element 11 dient der Auswahl der Anzeige- und Bediensprache.

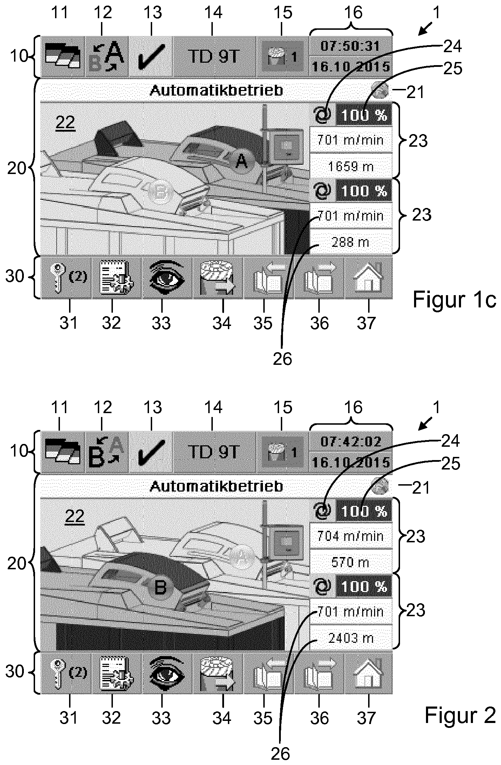

Das nächste Element 12 dient der Anzeige der aktuell ausgewählten Strecke A, B. Dies wird exemplarisch erreicht, indem das "A" gemäß dem ersten Hervorhebezustand größer und gut lesbar dargestellt wird, wohingegen das "B" gemäß dem Nichthervorhebezustand kleiner und schlechter lesbar dargestellt wird. Dies signalisiert dem Benutzer, dass die Strecke A ausgewählt ist. Vorzugsweise ist zudem vorgesehen, dass das Element 12 auch die Auswahl der Strecke A bzw. B ermöglicht. Dies erfolgt vorteilhafterweise mittels einfachen Anklickens des Elements 12, was dazu führt, dass das Element 12 seinen Zustand ändert, wie in Figur 2 dargestellt.

Das nächste Element 13 zeigt an, ob die aktuell ausgewählte Strecke in Ordnung ist oder nicht.

Alternativ ist vorgesehen, dass das Element 13 den Zustand aller gekoppelten Strecken zusammen darstellt. Hat im gezeigten Beispiel also eine der beiden Strecken A, B ein Problem, wird dies unabhängig von der Streckenauswahl mittels des Elements 13 angezeigt. Im gezeigten Beispiel ist ein vorzugsweise grüner Haken angezeigt, der signalisiert, dass beide Strecken A, B in Ordnung sind.

Das nächste Element 14 zeigt die Bezeichnung der zu bedienenden bzw. ausgewählten Strecke an. Im gezeigten Fall handelt es sich bei der gesamten Maschine um eine sogenannte Doppelstrecke, die somit die zwei Strecken A, B als eigenständige (Teil-)Spinnereivorbereitungsmaschinen beinhaltet.

Das nächste Element 15 zeigt die aktuelle Partiedateneinstellung an. Das Symbol signalisiert dies. Die Nummer daneben stellt exemplarisch einen Speicherplatz dar, in dem eine bestimmte Partiedateneinstellung abgelegt ist. Das Element 15 kann anklickbar gestaltet sein und es somit erlauben, zwischen den einzelnen Partiedateneinstellungsspeicherplätzen umzuschalten und damit die Partiedateneinstellung für die ausgewählte Strecke A, B zu ändern.

Das letzte Element 16 dient der Anzeige von Datum und Uhrzeit. Es ist vorzugsweise anklickbar und/oder mittels Texteingabefeldern realisiert. Dadurch ist es möglich, die aktuelle Zeit nebst Datum ändern zu können.

Der Bereich 30 dient dem Navigieren durch die später näher erläuterte Bedienungsstruktur, der Bedienung beider Strecken gleichzeitig und dem Anzeigen einer Zusammenfassung des gesamten Betriebsablaufs der gekoppelten Strecken bzw. deren Bedienung.

Ein erstes Element 31 zeigt die aktuell vorliegende Authentifizierungs- bzw. Berechtigungsstufe zum Bedienen an, und zwar hier vermittels der in Klammern angegebenen Zahl.

Das nächste Element 32 dient dem Einstellen der jeweils ausgewählten Strecke A, B bzw. auch beider Strecken A, B gleichzeitig.

Das nächste Element 33 ermöglicht die Anzeige von Diagnosedaten und Statistiken.

Das nächste Element 34 ermöglicht das Einleiten eines Kannenwechsels und damit das Stillsetzen der jeweiligen Strecke A, B. Nach Beenden des Kannenwechsels kann die jeweilige Strecke selbstverständlich wieder (neu) gestartet werden. Dies kann auch automatisch erfolgen.

Die nächsten drei Bedienknöpfe 35 - 37 dienen der Navigation innerhalb der Bedienstruktur, die mittels der Bedien- und Anzeigevorrichtung 1 einem Benutzer präsentiert wird. Der Knopf 35 ermöglicht das schrittweise Zurückspringen, der Knopf 36 das schrittweise Vorwärtsspringen und der Knopf 37 das Zurückspringen zur Hauptanzeige gemäß Figur 1 bzw. Figur 2.

Figur 1b zeigt vermittels der Statusanzeigen 24 einen Zustand, in dem beide Strecken A, B eingeschaltet sind. Daher rührt auch die zugehörige, veränderte Nutzeffektanzeige 25 nebst aktualisierter Geschwindigkeit im Werteanzeigeabschnitt 26.

Ferner ist der angezeigte Maschinenanzeigeabschnitt für die nicht ausgewählte Strecke B ebenfalls in einem Nichthervorhebezustand transparent dargestellt.

Figur 1c zeigt eine Abwandlung zu Figur 1b. Anstelle einer transparenten Darstellung wird hier für die nicht ausgewählte Strecke B eine Strichzeichnung verwendet.

Figur 2 zeigt den Bildschirm 1 von Figur 1c in einem zweiten Anzeigezustand.

Demgemäß ist nunmehr die Strecke B ausgewählt. Dementsprechend hat sich das Aussehen des Elements 12 geändert. Zudem ist nunmehr die hier optisch hinten angeordnete Strecke A entsprechend exemplarisch gemäß Figur 1c dargestellt.

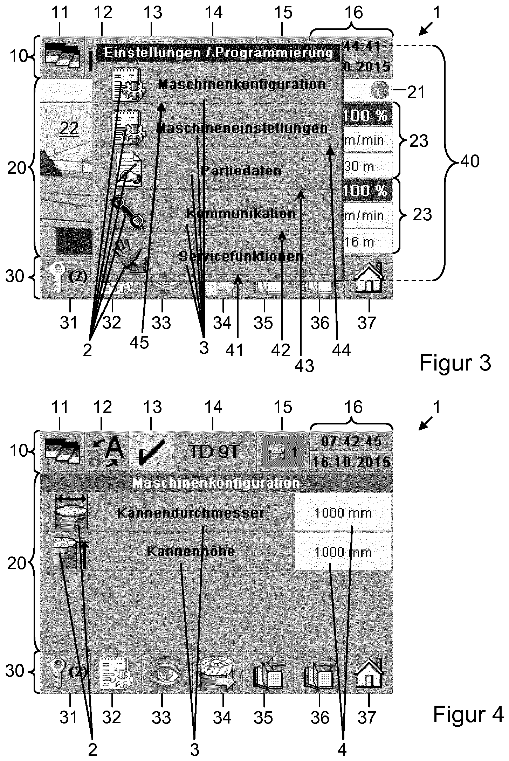

Figur 3 zeigt den Bildschirm 1 von Figur 1 in einem dritten Anzeigezustand. Dieser Anzeigezustand betrifft den Fall, dass die Strecke B ausgewählt ist, andeutungsweise erkennbar mittels des Anzeigeabschnitts 22, in dem ansatzweise die vorne abgebildete Strecke B als aktiv dargestellt ist. Dieser Anzeigezustand ist erreichbar, wenn der unten angeordnete Konfigurationsknopf 32 angeklickt wurde. Dadurch wird zum einen dieser Knopf 32 deaktiviert dargestellt. Zum anderen wird als Anzeigeabschnitt 40 ein Dialog mit beispielhaft fünf Knöpfen 41 - 45 angezeigt.

Die Knöpfe 41 - 45 ermöglichen es, Einstellungen bestehender Werte oder auch Zustände der jeweils ausgewählten Strecke A, B darstellen und gegebenenfalls ändern zu können. Dazu sind auf jedem Knopf 41 - 45 im linken Bereich Symbole 2 angezeigt, die repräsentieren, welche Art von Information mittels Anklickens des jeweiligen Knopfs 41 - 45 erreichbar ist. Rechts daneben befindet sich eine textuelle Beschreibung 3 der jeweiligen Informationsart.

Wird der Knopf 45 in Figur 3 angeklickt, erscheint der in Figur 4 gezeigte Bildschirminhalt. Für die hier exemplarisch ausgewählte Strecke A wird die vorhandene Konfiguration hier im Rahmen der zwei Werte "Kannendurchmesser" und "Kannenhöhe" dargestellt. Diese Darstellung erfolgt dabei jeweils mittels dreier Bestandteile. Links ist ein jeweiliges Symbol 2 angezeigt, das den jeweiligen Maschinenkonfigurationswert bildhaft darstellt. Rechts daneben befindet sich eine textuelle Beschreibung 3 dieses Konfigurationswertes. Im rechten Bereich befindet sich dann der jeweils eingestellte Einstellwert 4.

Es ist vorzugsweise vorgesehen, im Werteanzeigeabschnitt die Änderung der angezeigten Werte 4 zu ermöglichen, sei es mittels Texteingabe oder auch mittels Auswahl aus einer Liste. Es könnte auch ein hier nicht vorhandener Knopf angezeigt werden, über den beispielsweise ein Auswahldialog angezeigt wird. Das Abschließen der Werteänderung kann mittels Verlassens des Dialogs erfolgen. Mittels Anklickens des Elements 35 oder 37 kann der Benutzer wieder zum Hauptbildschirm gemäß Figur 1 gelangen.

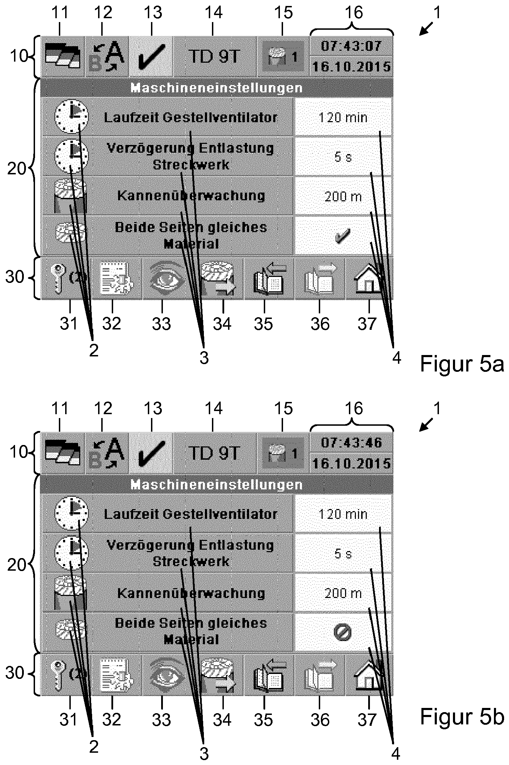

Wird der Knopf 44 in Figur 3 angeklickt, erscheint der in Figur 5a gezeigte Bildschirminhalt. D. h. hier werden im Anzeigeabschnitt 20 alle Maschineneinstellungsdaten beispielhaft wieder vermittels dreier Bereiche (Symbol 2, textuelle Beschreibung 3, Wert bzw. Status 4) dargestellt. Die oberen drei Zeilen beinhalten Einstellungswerte 4. Die untere, vierte Zeile zeigt einen Status 4 an, nämlich, ob für beide Seiten (d. h. für beide Spinnereivorbereitungsmaschinen A, B) das gleiche Material ausgewählt ist. Dies wird hier mittels eines Hakens als positiv dargestellt.

Figur 5b zeigt den Bildschirm 1 für den Fall, dass für die beiden Spinnereivorbereitungsmaschinen A, B zueinander unterschiedliche Materialien ausgewählt sind.

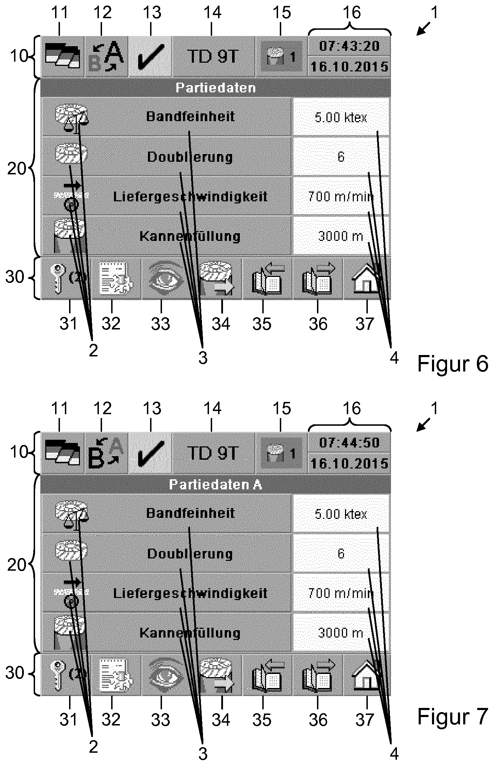

Wird der Knopf 43 in Figur 3 angeklickt, erscheint der in Figur 6 gezeigte Bildschirminhalt. D. h. hier werden die Partiedaten exemplarisch beider Strecken A, B dargestellt, wiederum mithilfe der dreizeiligen Zeilenaufteilung mittels Symbolen 2, textueller Beschreibung 3 und Werte- bzw. Statusangaben 4, und zwar für den Fall, dass bei beiden Strecken A, B die gleichen Partiedaten eingestellt sind bzw. es vorgegeben ist, dass beide Strecken A, B automatisch die gleichen Partiedaten erhalten sollen.

Figur 7 zeigt eine Abwandlung des Bildschirms 1 von Figur 6. Wie zu erkennen, werden hier die Partiedaten für die Strecke A dargestellt. Diese Anzeige erscheint vorzugsweise, wenn der Knopf 43 angeklickt wurde und für die Strecken unterschiedliche Partiedaten eingestellt sind. In dem Fall werden die Partiedaten der aktuell ausgewählten Strecke (hier: A) angezeigt.

Alternativ werden immer zuerst die Partiedaten für die Strecke A dargestellt. Ein Klick auf den Knopf 36 führt zur Anzeige der Partiedaten der Strecke B. Ein Klick auf den Knopf 35 führt wieder zur Anzeige für die Strecke A zurück.

Wiederum alternativ wird zunächst eine Auswahl angezeigt, um die jeweilige Strecke A, B auszuwählen, für die die Partiedaten angezeigt werden sollen.

Trotzdem ist es möglich, mittels des Knopfs 12 die Maschinenauswahl zu ändern. Die Anzeige der Partiedaten ändert sich vorzugsweise aber zunächst nicht, wie in Figur 7 dargestellt. Erst beim nächsten Aufruf der Partiedatenanzeige würde die Anzeige die Strecke B betreffen.

Zudem ist vorzugsweise vorgesehen, aufgrund der Auswahl mittels des Knopfs 12 über hier nicht dargestellte Zusatztasten die ausgewählte Strecke (hier: B) beispielsweise starten oder anhalten zu können, ohne dass sich der Bildschirminhalt ändert.

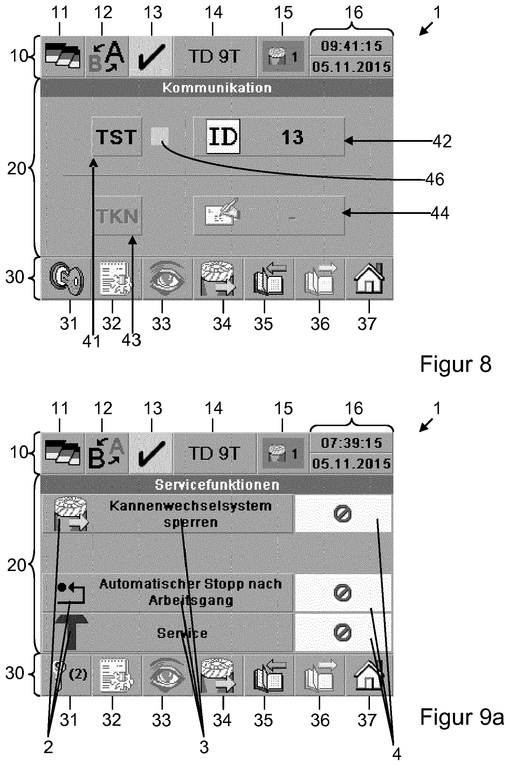

Wird der Knopf 42 in Figur 3 angeklickt, erscheint der in Figur 8 gezeigte Bildschirminhalt. Dabei gibt es hier zwei übereinander Anzeigebereiche. Im oberen ist ein Knopf 41 angeordnet, der dem Aktivieren bzw. Deaktivieren einer Kommunikation über eine vorbestimmte Schnittstelle wie einer seriellen Kommunikationsschnittstelle, RJ45 usw. dient. Im gezeigten Zustand ist diese Kommunikation aktiviert bzw. möglich. Ein vorzugsweise als Schaltfeld 46 realisiertes Anzeigeelement zeigt den Status der Verbindung an. Dies wird vorteilhafterweise mittels Farben signalisiert. Ein Klick auf das Schaltfeld 46 kann bewirken zu prüfen, ob eine Kommunikationsverbindung nach außen besteht oder nicht, oder ob alles richtig funktioniert. Zusätzlich oder alternativ kann darüber die Kommunikation freigeschaltet oder gesperrt werden. Rechts daneben ist ein Knopf 42 angeordnet. Dieser dient dem Zweck, eine Kennung setzen zu können, mithilfe der die Kommunikation stattfinden soll. Es ist beispielsweise möglich, mit einem Server Kontakt aufzunehmen. Die Kennung ist vorzugsweise für beide Strecken A, B unterschiedlich. Es kann aber auch eine Kennung geben, die eine Kommunikation mit beiden Strecken A, B ermöglicht.

Im unteren Anzeigebereich sind zwei analog ausgebildete Knöpfe 43, 44 angeordnet. Diese dienen der Kommunikation beispielhaft mit einer Anlagensteuerung. Darüber kann die Anlagensteuerung Daten über die mit der Vorrichtung 1 gekoppelten Spinnereivorbereitungsmaschinen sammeln. Die Knöpfe 43, 44 sind im gezeigten Beispiel deaktiviert dargestellt, um zu signalisieren, dass solche eine Kommunikation aktuell nicht möglich ist. Alternativ dazu werden die Knöpfe 43, 44 nicht angezeigt.

Wird der Knopf 41 in Figur 3 angeklickt, erscheint der in Figur 9a gezeigte Bildschirminhalt. Es können exemplarisch drei Servicefunktionen genutzt werden. Dazu werden diese Funktionen analog zu Figur 4 wieder mittels dreier Bestandteile 2, 3, 4 angezeigt. Es ist vorzugsweise vorgesehen, im Statusanzeigeabschnitt die jeweilige Funktion ein- und abschalten zu können. Es könnte auch ein hier nicht vorhandener Knopf angezeigt werden, über den beispielsweise ein Auswahldialog angezeigt wird.

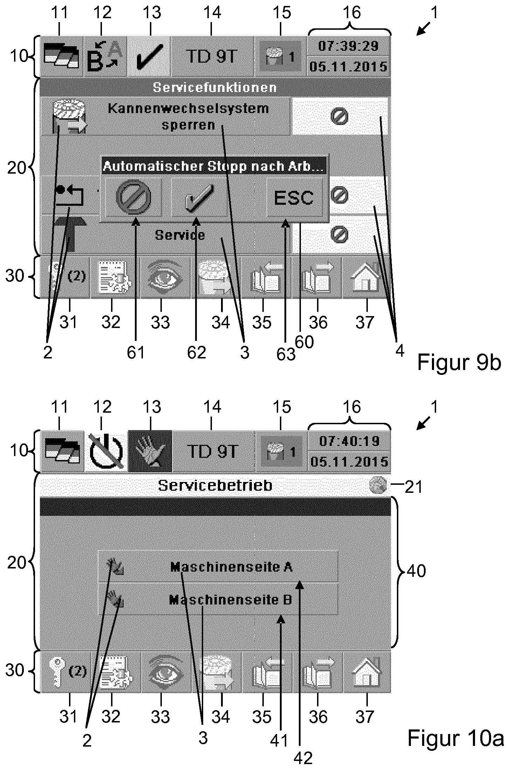

Im Fall des "automatischen Stopps nach Arbeitsgang" wird nach Anklicken dieses Bereichs vorzugsweise ein Dialog 60 gemäß Figur 9b angezeigt.

Der Dialog 60 umfasst einen Knopf 61 zum Abschalten dieser Funktion, einen Knopf 62 zum Zuschalten dieser Funktion und einen Knopf 63 zum Abbrechen des Dialogs 60, ohne die Einstellung dieser Funktion zu ändern. Jede der Servicefunktionen kann sich auf eine der zwei Strecken A, B oder auch auf beide beziehen. Im zweiten Fall ist im Fall des vorgenannten Stopps vorzugsweise vorgesehen, dass beide Strecken A, B beim nächsten Vorliegen einer jeweils leeren Kanne als Faserbandablagebehälter anhalten.

Wird der Bereich "Service" in Figur 9a angeklickt, erscheint der in Figur 10a dargestellte Bildschirminhalt. Dies kann an die Bedingung geknüpft sein, dass ein zusätzlicher (Schlüssel-) Schalter beispielsweise in einem Schaltschrank betätigt werden muss. Andernfalls wäre diese Funktionalität nicht ausführbar.

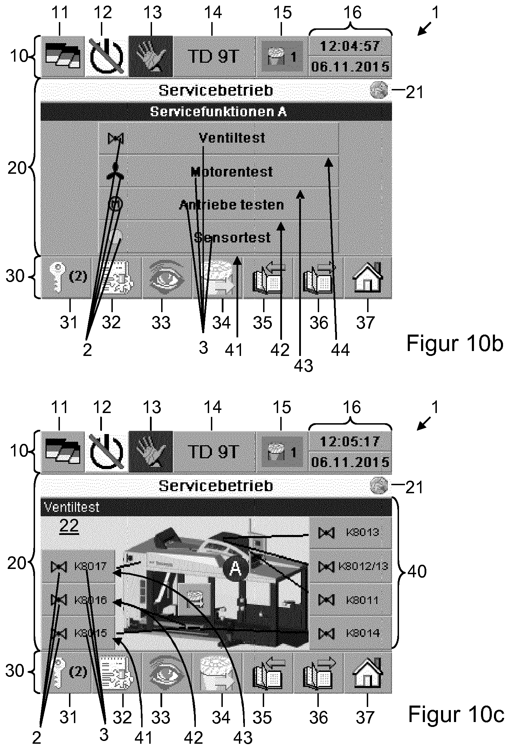

Gibt es für jede Strecke A, B einen eigenen Schlüsselschalter, und ist nur einer betätigt, entfällt der Bildschirminhalt gemäß Figur 10a, und es wird direkt zu Figur 10b gewechselt. Alternativ oder zusätzlich kann die Bedingung vorgesehen sein, dass der Service beispielsweise aufgrund eines eingestellten Handbetriebs hinsichtlich der Strecken A, B auch ohne Schlüsselschalter erreichbar ist, wenn der Status 4 für diesen Punkt in Figur 9b gesetzt ist, also ein Haken angezeigt wird. Alternativ kann auch ein Klick auf den Bereich "Service" ausreichen.

Das auf dem Knopf 12 veränderte Symbol mit dem diagonal verlaufenden Strich signalisiert, dass zumindest eine der beiden Strecken A, B abgeschaltet ist und aktuell nicht einschaltbereit ist. Das Hand-Symbol auf dem Knopf 13 signalisiert den Servicebetriebsmodus. Im Anzeigeabschnitt 20 wird eine Auswahl der Strecken A, B angezeigt. Sind beide abgeschaltet, kann jede der zwei Strecken A, B ausgewählt werden. Nach Auswahl einer der zwei Strecken A, B erscheint ein in Figur 10b dargestellter Bildschirminhalt. Läuft aber noch eine Strecke A, B, wird der entsprechende Bereich in Figur 10a deaktiviert angezeigt.

Hier können mithilfe von exemplarisch vier Knöpfen 41 - 44 verschiedene Servicefunktionen aufgerufen werden, repräsentiert mittels eines jeweiligen Paares von Symbol 2 und textueller Beschreibung 3.

Wird der Knopf 44 angeklickt, erscheint der in Figur 10c dargestellte Bildschirminhalt.

Der Anzeigeabschnitt 22 ist mit einer schematischen Abbildung der ausgewählten Strecke A gefüllt. In einem Titelbereich wird die jeweilige Servicetätigkeit ("Ventiltest") angezeigt.

Links unten und rechts sind im Anzeigeabschnitt 22 beispielhaft sieben Knöpfe dargestellt, von denen nur die linken mit Bezugszeichen versehen sind, jeweils mit Symbol 2 und textueller Beschreibung 3 als Kürzel. Ein Klick auf den jeweiligen Knopf 41 - 43 wählt den jeweiligen Serviceprozess aus. Über vorzugsweise zusätzlich vorgesehene Tasten kann der ausgewählte Prozess gestartet und beendet werden.

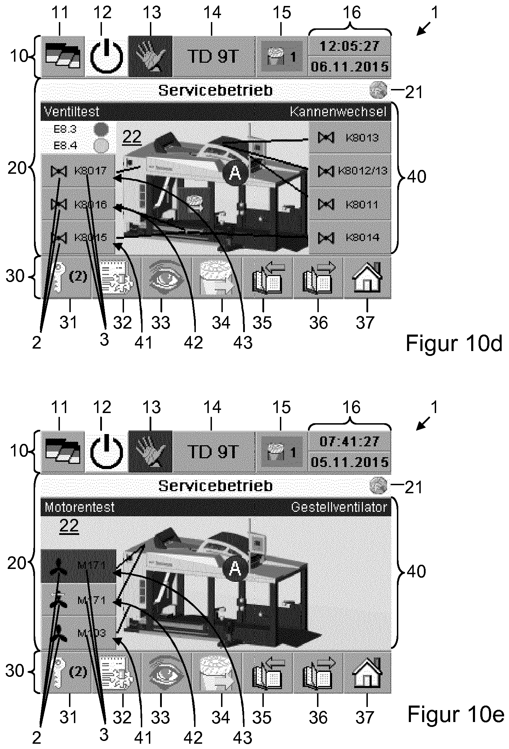

Figur 10d zeigt eine Abwandlung zu Figur 10c. Hier sind oberhalb der linken drei Knöpfe 41 - 43 zusätzliche Sensorzustände angegeben. Zusätzlich ist zur Servicetätigkeit ("Ventiltest") noch ein Kannenwechsel angegeben. Dabei wird ein Kannenwechsel simuliert.

Beim Knopf 12 fehlt der diagonal verlaufende Strich, was signalisiert, dass die ausgewählte Strecke (hier: A) einschaltbereit ist.

Wird der Knopf 43 in Figur 10b angeklickt, erscheint der in Figur 10e dargestellte Bildschirminhalt.

Der Anzeigeabschnitt 22 ist wieder mit einer schematischen Abbildung der ausgewählten Strecke A gefüllt. Ferner gibt es an der Strecke A hier drei Bereiche, an denen Servicearbeiten durchgeführt werden können. In einem Titelbereich werden die jeweilige Servicetätigkeit ("Motorentest") und der zugehörige Bereich der Strecke A ("Gestellventilator") angezeigt.

Links unten sind im Anzeigeabschnitt 22 beispielhaft drei Knöpfe 41 - 43 dargestellt, jeweils mit Symbol 2 und textueller Beschreibung 3 als Kürzel. Ein Klick auf den jeweiligen Knopf 41 - 43 wählt den jeweiligen Serviceprozess aus. Auch hier kann über vorzugsweise zusätzlich vorgesehene Tasten der ausgewählte Prozess gestartet und beendet werden.

Die Servicearbeiten können auch für beide Strecken A, B, gleichzeitig gestartet werden. In dem Fall enthält die Anzeige gemäß Figur 10a vorzugsweise einen zusätzlichen Knopf beispielsweise mit der Aufschrift "Beide Maschinenseiten" bzw. "Alle Maschinenseiten". Vorzugsweise ist dies dann vorgesehen, wenn der Status für den Punkt "Service" in Figur 9b gesetzt ist.

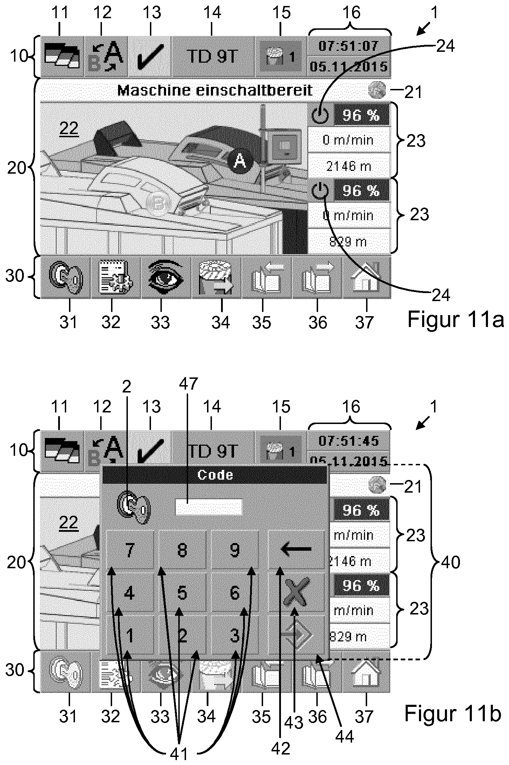

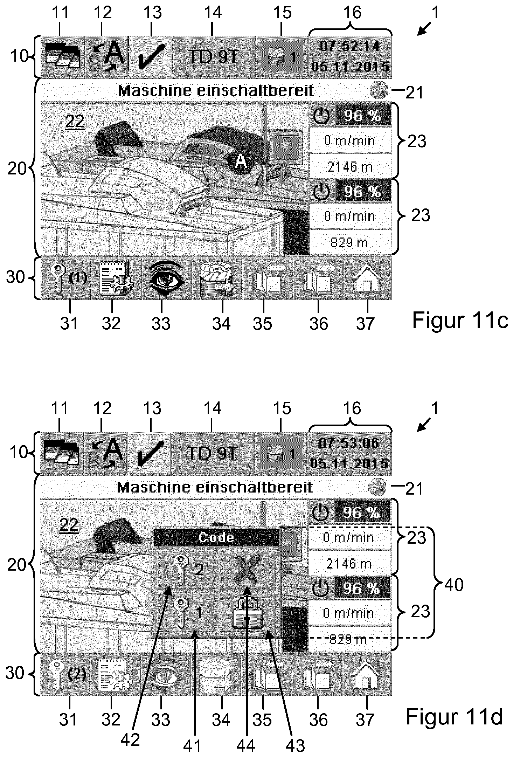

Figur 11 zeigt den Bildschirm 1 in verschiedenen Zuständen.

Der in Figur 11a gezeigte Zustand entspricht im Wesentlichen dem in Figur 1c gezeigten. Allerdings sind hier beide Strecken A, B abgeschaltet, wie mittels der Symbole 24 dargestellt. Ferner zeigt der Knopf 31 mit der aktuell eingestellten Berechtigungsstufe mittels des hier dargestellten Schlüssels an, dass die Stufe "Gast" aktiv ist. Es handelt sich mithin um die niedrigste Berechtigungsstufe, um die Strecken A, B zu bedienen. Dies bedingt sehr eingeschränkte Möglichkeiten der Bedienung und eventuell auch der Anzeige von Einstellungen an den Strecken A, B.

Wird der Knopf 31 angeklickt, erscheint der in Figur 11b gezeigte Bildschirminhalt. D. h. ein Dialog 60 wird angezeigt, der eine Änderung der Berechtigungsstufe und damit der Stufe der Bedienmöglichkeiten ermöglicht. Oben links wird die Stufe der aktuellen Berechtigungsstufe (hier: "Gast") mittels eines Symbols 2 dargestellt. Zusätzlich oder alternativ kann dies auch im Dialogtitel angezeigt sein.

Die Knöpfe 41 ermöglichen die Eingabe eines hier beispielhaft aus Ziffern bestehenden Authentifizierungscodes, und zwar über ein Eingabefeld 47. Ein Knopf 42 ist vorgesehen, bei einem Anklicken ein Löschen der letzten Ziffer vor einem im Eingabefeld 47 dargestellten Cursor zu löschen. Ein längeres Anklicken des Knopfes 42 könnte das Löschen aller eingegebenen Ziffern bewirken. Der Knopf 43 ist exemplarisch vorgesehen, den Dialog 60 zu verlassen, ohne dass der eingegebene Code beachtet wird. Der Knopf 44 entspricht einem Bestätigungsknopf und ermöglicht der den Bildschirm 1 ansteuernden Schaltung (z. B. Prozessor), den eingegebenen Code zu prüfen und bei Vorliegen eines gültigen Codes die Berechtigungsstufe zu ändern.

Wurde in diesem Rahmen ein Code der Berechtigungsstufe 1 eingegeben, ändert sich der Bildschirminhalt gemäß Figur 11c. Anhand des Knopfs 31 ist erkennbar, dass nunmehr die Berechtigungsstufe 1 ("Hauptbenutzer") aktiv ist, verbunden mit den entsprechend freigeschalteten Bedienmöglichkeiten und Informationen.

Wird der Knopf 31 wieder angeklickt, erscheint der in Figur 11d gezeigte Bildschirminhalt, da bereits eine Berechtigungsstufe aktiv ist, die nicht der Standardeinstellung ohne Code ("Gast") entspricht. Im in Figur 11d gezeigten Beispiel ist die Berechtigungsstufe 2 aktiv, die exemplarisch mit Administratorrechten gleichzusetzen ist.

Demgemäß wird ein Dialog 60 angezeigt, der für jede Berechtigungsstufe einen zugehörigen Knopf 41 - 43 aufweist. Ein Klick auf den Knopf 43 bewirkt das Aktivieren der korrespondierenden Stufe "Gast". Ein Klick auf den Knopf 42 für die Berechtigungsstufe 1 bewirkt einen Wechsel in diese Stufe, da dies im gezeigten Beispiel von Administratorebene aus erfolgt, also einer Stufe mit mehr Rechten. Ein Klick auf den Knopf 42 ermöglicht die Änderung des Codes der zugehörigen Berechtigungsstufe, da diese gleich der aktiven Berechtigungsstufe ist.

D. h. ein Wechsel auf eine niedrigere Berechtigungsstufe ist über diesen Dialog immer möglich. Ein Anklicken eines der aktiven Stufe entsprechenden Knopfs 41, 42 ermöglicht das Ändern des zu dieser Stufe gehörenden Freischaltcodes.

Alternativ dazu kann vorgesehen sein, dass der Dialog 40 lediglich ein Ändern der Freischaltcodes ermöglicht. Dazu kann vorgesehen sein, dass ausschließlich der Freischaltcode der gerade aktuellen Berechtigungsstufe geändert werden darf, und zwar mittels Anklickens des zugehörigen Knopfs 41, 42. Der Knopf der aktuell nicht aktiven Berechtigungsstufe 42, 41 wäre in dem Fall beispielhaft deaktiviert. Alternativ können die Freischaltcodes der aktuellen und, wenn vorhanden, der unteren Berechtigungsstufe/n mittels Anklickens des zugehörigen Knopfs 41, 42 geändert werden. Ein Klick auf den Knopf 43 schaltet auf die niedrigste Berechtigungsstufe zurück.

Soll die Berechtigungsstufe geändert werden, müsste zunächst auf die niedrigste Berechtigungsstufe umgeschaltet werden, wie vorstehend erläutert. Nach Beenden des Dialogs 40 in Figur 11d müsste der Knopf 31 erneut gedrückt werden, und der Dialog 40 gemäß Figur 11b erscheint.

Ein Klick auf den Knopf 44 bricht die ganze Aktion ab.

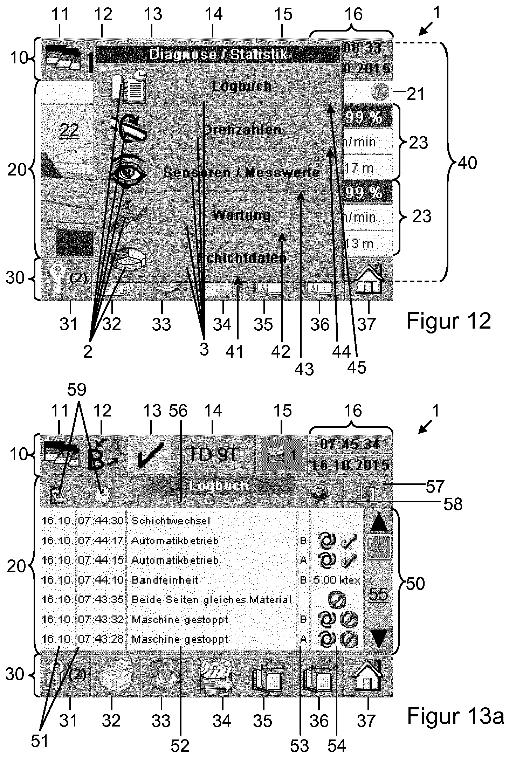

Wurde der Knopf 33 angeklickt, wird als Anzeigeabschnitt 40 ein neuer Dialog angezeigt, wie in Figur 12 dargestellt. Dieser Dialog entspricht vom Aufbau dem Dialog von Figur 3.

Der obere Knopf 45 dient mithilfe des jeweiligen Symbols 2 und der textuellen Beschreibung 3 dem Anzeigen eines Logbuches, wie in Figur 13a abgebildet.

Dabei handelt es sich hier im Wesentlichen um eine Tabelle 50. Diese weist im Bereich zweier linker Spalten 51 Zeitwerte (Datum, Uhrzeit) auf, zu denen ein jeweiliges Ereignis stattgefunden hat. Die nächste Spalte 52 zeigt das jeweilige Ereignis als textuelle Beschreibung. Die nächste Spalte 53 zeigt an, auf welche Spinnereivorbereitungsmaschine sich dieses Ereignis bezieht. Ist A oder B angegeben, ist klar, dass sich das jeweilige Ereignis auf die jeweilige Spinnereivorbereitungsmaschine A bzw. B bezieht. Fehlt ein Eintrag, bedeutet dies, dass das jeweilige Ereignis beide Spinnereivorbereitungsmaschinen A, B gleichzeitig betrifft. Die nächste, hier rechte Spalte 54 stellt dar, welcher Zustand zu dem jeweiligen Zeitpunkt vorlag, oder welcher Wert eingestellt wurde (vgl. beispielsweise Zeile 4: "5.00 ktex"). Am rechten Rand der Tabelle 50 ist, wenn erforderlich, ein Scrollbalken 55 angeordnet, um auch die hier nicht sichtbaren Einträge anzeigen zu können.

Oberhalb der Tabelle 50 finden sich im Bereich der Zeitspalten 51 Symbole 59 für das Datum und die Uhrzeit. In der Mitte befindet sich ein Titelbereich 56, auf dem lediglich der Eintrag "Logbuch" angegeben ist. Unmittelbar rechts neben dem Titel befindet sich ein Knopf 58, der dazu dient, den Tabelleninhalt zu aktualisieren. Alternativ oder zusätzlich kann vorgesehen sein, die Aktualisierung der Anzeige periodisch, beispielsweise einmal in der Minute, durchzuführen.

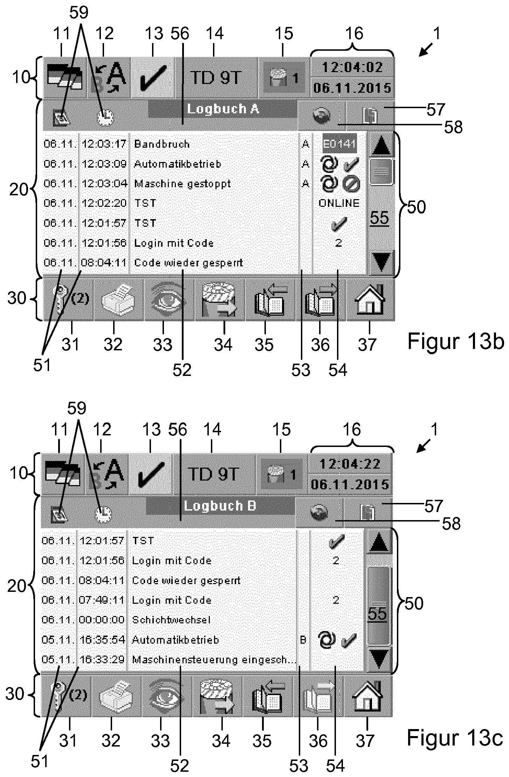

Die in Figur 13a gezeigte Tabelle zeigt die Daten für beide Spinnereivorbereitungsmaschinen an. Bei Anklicken des Knopfs 36 werden vorzugsweise nur die Ereignisse für die Spinnereivorbereitungsmaschine A angezeigt (vgl. Figur 13b). Bei nochmaligem Klick auf den Knopf 36 erscheinen die Logbuchdaten für die Spinnereivorbereitungsmaschine B, wie in Figur 13c dargestellt. Der Eintrag "E0141" gemäß Figur 13b stellt dabei exemplarisch eine Störung dar.

Wird der Knopf 57 angeklickt, werden beispielhaft nur die Ereignisse mit einer Störung aufgelistet. Es handelt sich mithin um eine gefilterte Datenanzeige.

Ferner ist zu erkennen, dass der Knopf 32 anstelle des ein Ringbuch repräsentierenden Symbols ein Druckersymbol anzeigt. Dies signalisiert, dass die Daten des Logbuches über die vorgenannte Schnittstelle nach außen gesendet werden könnten. Allerdings ist der Knopf 32 deaktiviert, was zusätzlich signalisiert, dass dies derzeit nicht möglich ist, da beispielsweise kein empfangsbereites Gerät angeschlossen bzw. gekoppelt ist.

Ferner verfügt vorzugsweise die Vorrichtung 1 selbst über einen gesonderten Anschluss für einen externen Speicher. Der Anschluss kann ein Kommunikationsanschluss wie USB oder auch ein Speicherkarten-Steckplatz sein. Die Vorrichtung 1 ist vorzugsweise in der Lage zu erkennen, wenn ein externer Speicher angeschlossen ist. Ist dies der Fall, ändert sich das Bild des Knopfs 32, und es wird exemplarisch ein Diskettensymbol angezeigt, wie in Figur 13b zu sehen. Ein Klick auf den Knopf 32 würde mithin ein Speichern der Logbuchdaten auf ebenjenem externen Speicher bewirken. Zusätzlich zu den Logbuchdaten ist dies vorteilhafterweise auch für alle anderen exportierbaren Daten (wie Einstelldaten) möglich.

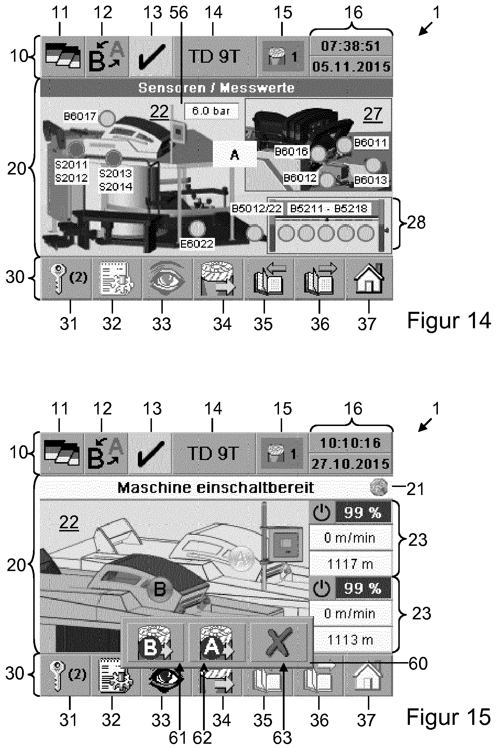

Wird der Knopf 43 in Figur 12 angeklickt, erscheint der in Figur 14 gezeigte Bildschirminhalt. Der Anzeigeabschnitt 22 ist exemplarisch dreigeteilt. In einem größeren Bereich ist die ausgewählte Strecke nebst Kennung (hier: A) mit verschiedenen Kurzbezeichnungen für sensorisch erfasste Werte bzw. Zustände der Strecke A und gegebenenfalls daran angeordneten Punkten dargestellt. Die Kürzel (z. B. "B6017") repräsentieren somit vorbestimmte Messstellen bzw. Sensoren und damit korrespondierende Arten von Mess- bzw. Zustandswerten. Ein grüner Punkt (z. B. "B6017") bedeutet, dass der Sensor der jeweiligen Strecke A an der betreffenden Stelle einen Sensorwert ausgibt, der im gewünschten (Werte-) Bereich liegt bzw. den gewünschten Zustand anzeigt. Ein roter Punkt (z. B. "S2011") signalisiert einen Fehler oder einen Wert außerhalb dieses Bereichs bzw. einen unerwünschten Zustand. In einem hier oben rechts angeordneten, separaten Anzeigeabschnitt 27 ist das Streckwerk der Strecke A offen und vergrößert abgebildet. Damit ist es möglich, die dort vorkommenden, mehreren Sensorstellen B6011 - B6016 optisch erfassbar darstellen zu können. Ein weiterer Anzeigeabschnitt 28 stellt die Zustände (und/oder Messwerte) an anderen, hier nicht abbildbaren Stellen der Strecke A dar. Oben mittig weist der Anzeigeabschnitt 22 noch die Angabe "6.0 bar" auf. Dies signalisiert die Druckverhältnisse an der Strecke A.

Der Knopf 12 mit dem hervorgehobenen "B" signalisiert wieder, dass während der Anzeige der Werte für die Strecke A die Strecke B ausgewählt worden ist.

Wurde der Knopf 34 angeklickt, erscheint der in Figur 15 gezeigte Bildschirminhalt hier in Form eines Dialogs 60, und zwar exemplarisch im unteren Bereich des Bildschirms 1 im Randbereich zwischen den Anzeigeabschnitten 20, 30. Der Dialog 60 besteht im gezeigten Beispiel hauptsächlich aus drei Knöpfen 61 - 63.

Der linke Knopf 61 dient dem Auslösen des Kannenwechsels für die Spinnereivorbereitungsmaschine B. Analog dazu wird ein Anklicken des in der Mitte angeordneten Knopfs 62 einen Kannenwechsel an der Spinnereivorbereitungsmaschine A bewirken. Die Reihenfolge der Knöpfe 61, 62 rührt von der Auswahl der jeweiligen Spinnereivorbereitungsmaschine A, B her. Wäre also die Spinnereivorbereitungsmaschine A ausgewählt, könnte vorgesehen sein, den Knopf 62 mit dem Knopf 61 von der Position her miteinander zu vertauschen. Der Knopf 63 ("X") bricht die gesamte Aktion ab, und der Dialog 60 verschwindet wieder. Die Anordnung der Knöpfe 61, 62 kann auch dergestalt sein, dass sie hinsichtlich ihrer Bezeichnung unterhalb der Kennzeichnung des jeweils zugehörigen Maschinenanzeigeabschnitts angeordnet sind. Dies dient der intuitiven Bedienbarkeit.

Die Erfindung ist nicht auf die vorbeschriebenen Ausführungsformen beschränkt.

Obwohl die Erfindung in Verbindung mit Strecken beschrieben worden ist, kann sie auf jede Anordnung von Spinnereivorbereitungsmaschinen, wie Wickelmaschinen, Karden usw. angewendet werden. Es ist auch eine Mischung von Spinnereivorbereitungsmaschinen verschiedener Art denkbar, beispielsweise eine Karde und eine in Faserbandlaufrichtung dahinter angeordnete Strecke.

Anstelle von zwei Spinnereivorbereitungsmaschinen A, B können auch drei oder mehr Spinnereivorbereitungsmaschinen vorgesehen sein, die auf Basis des erfindungsgemäßen Verfahrens mittels der Anzeige- und Bedienvorrichtung 1 angesteuert werden.

Um die Auswahl der jeweiligen Maschine optisch darzustellen, sind beispielsweise im Anzeigeabschnitt 20 diese Maschinen beispielsweise als Draufsicht spaltenartig nebeneinander angeordnet, und jeweils ein Bild der Spinnereivorbereitungsmaschinen ist optisch hervorgehoben, wie beispielsweise die Spinnereivorbereitungsmaschine A in Figur 1.

Alternativ dazu wird nur ein Abbild einer Spinnereivorbereitungsmaschine aktuell abgebildet, und zwar vorzugsweise die aktuell ausgewählte.

Um dies im Bereich 12 optisch deutlich zu machen, kann dort beispielsweise vorgesehen sein, in der Mitte einen großen Buchstaben anzuordnen, der der ausgewählten Spinnereivorbereitungsmaschine entspricht, und oben und unten bzw. außen herum sind Buchstaben der nicht ausgewählten Spinnereivorbereitungsmaschinen platziert.

Ein Klick auf einen der nicht ausgewählten Buchstaben kann dann dazu führen, die jeweilige Spinnereivorbereitungsmaschine auszuwählen.

Die Anzeige der jeweiligen Werte und Zustände der Spinnereivorbereitungsmaschinen kann ebenfalls variieren. Beispielsweise kann im rechten Anzeigeabschnitt 23 vorgesehen sein, dass nur Werte und Einstellungen der jeweils ausgewählten Spinnereivorbereitungsmaschine dargestellt werden. Mittels beispielsweise eines Scrollbalkens könnte es möglich sein, die Werte und Einstellungen einer jeweils anderen, nicht ausgewählten Spinnereivorbereitungsmaschine anzuzeigen.

Im Fall der vorgenannten Anzeige lediglich der aktuell ausgewählten Spinnereivorbereitungsmaschine würde diese auf die Spinnereivorbereitungsmaschine geändert, deren Werte bzw. Einstellungen aktuell anzuzeigen sind.

Die dargestellten Knöpfe insbesondere 31 - 34 können beispielsweise durch Listboxes ausgetauscht sein, die es ermöglichen, an der jeweiligen Stelle eine von mehreren Aktionen auszuwählen. Beispielsweise könnte der Knopf 34 so ausgebildet sein, dass er ein direktes Aktivieren eines Kannenwechsels für jede Spinnereivorbereitungsmaschine ermöglicht, ohne einen gesonderten Dialog 60 anzeigen zu müssen.

Auch die Anordnung der Elemente und Anzeigeabschnitte 10, 20, 30 kann je nach Anwendungsfall variieren.

Zudem kann vorgesehen sein, alle gekoppelten Spinnereivorbereitungsmaschinen auswählen zu können. Dies ermöglicht, für alle Maschinen identische Einstellungen vornehmen zu können. Dies ist insbesondere bei in einer Prozesskette hintereinander angeordneten Spinnereivorbereitungsmaschinen von Vorteil.

Zusätzlich oder alternativ kann vorgesehen sein, bestimmte Einstellungen nur an allen gekoppelten Spinnereivorbereitungsmaschinen gemeinsam vornehmen zu können. Beispielsweise hängen bei dem vorgenannten Beispiel der Karde mit nachgeschalteter Strecke die Liefergeschwindigkeit der Karde unmittelbar mit der Abzugsgeschwindigkeit der Strecke zusammen; ein Eingeben der Werte getrennt voneinander könnte Bedienungsfehler ermöglichen.

Alternativ oder zusätzlich kann vorgesehen sein, dass nach Start des Bedienprogramms eine/oder alle Spinnereivorbereitungsmaschine/n initial ausgewählt ist bzw. sind. Damit gibt es keinen undefinierten Auswahlzustand.

Zusätzlich zu dem gezeigten Bildschirm 1 kann vorgesehen sein, dass mehrere Bedientasten vorhanden sind, um grobe Funktionen, wie das Einschalten, Anhalten und oder Testlaufenlassen einer jeweiligen Spinnereivorbereitungsmaschine A, B auslösen zu können. Der Bildschirm muss demnach nicht zwangsläufig berührungssensitiv sein.

Die vorgenannten Berechtigungsstufen können auch mehr als drei sein. Überdies können die Berechtigungsstufen auch Rollen beinhalten. Beispielsweise kann eine Rolle die Zuständigkeit für nur einen Teil der gekoppelten Spinnereivorbereitungsmaschinen beinhalten. Folgendes Beispiel soll dies verdeutlichen: Es kann vorgesehen sein, dass die beiden Strecken A, B unabhängig voneinander betrieben werden. Die Strecke A verarbeitet Naturfasern, während die Strecke B Chemiefasern verarbeitet. Ein Mitarbeiter, der auf Naturfasern spezialisiert ist, kann die Berechtigung haben, nur die Strecke A zu bedienen. Ein anderer Mitarbeiter könnte die Berechtigung haben, nur die Strecke B zu bedienen. Dafür können mithilfe des jeweiligen Codes die Berechtigungen so gesetzt werden, dass nach Eingabe des jeweiligen Codes die jeweilige Strecke vorausgewählt wird und diese Auswahl nicht mehr verändert werden kann. Der Knopf 12 gemäß Figur 1 kann deaktiviert dargestellt werden.

Die Vorrichtung 1 wird vorzugsweise mittels einer informationsverarbeitenden Vorrichtung wie einem Embedded System mit Prozessor betrieben. Dieses kann mittels der Vorrichtung 1 selbst gebildet sein.

Auch kann eine Software vorgesehen sein, die die Befehle zum Betreiben der Vorrichtung 1 aufweist. Alternativ kann auch eine Installationsvariante vorgesehen sein, die es ermöglicht, beispielhaft die Vorrichtung 1 mit der Software beispielsweise im Rahmen eines Upgrades zu versehen. D. h. neue Hardware ist nicht zwangsläufig erforderlich.

Im Ergebnis sind sowohl ein Verfahren als auch ein System geschaffen, die es auf einfache Weise ermöglichen, eine von mehreren Spinnereivorbereitungsmaschinen zur Bedienung auswählen und trotzdem weiterhin Aktionen ausführen zu können, die für alle auswählbaren Spinnereivorbereitungsmaschinen gleichzeitig ausgeführt werden können.

### Bezugszeichenliste

- 1: Bedien- und Anzeigevorrichtung
- 2: Symbol
- 3: Beschreibung
- 4: Wert/Status
- 10: Anzeigeabschnitt
- 11: Sprachauswahl
- 12: Maschinenauswahl
- 13: Statusanzeige
- 14: Maschinenbezeichnung
- 15: Kanneneinstellungsanzeige
- 16: Zeitanzeige

- 20: Anzeigeabschnitt
- 21: Informationszeile
- 22: Anzeigeabschnitt
- 23: Werteanzeigeabschnitt
- 24: Statusanzeige
- 25: Nutzeffektanzeige
- 26: Werteanzeigeabschnitt
- 27: Anzeigeabschnitt
- 28: Anzeigeabschnitt

- 30: Anzeigeabschnitt
- 31: Authentifizierungsknopf
- 32: Konfigurationsknopf
- 33: Diagnose/Statistikknopf
- 34: Kannenwechsel
- 35: Rückwärtsknopf
- 36: Vorwärtsknopf
- 37: Rücksprungknopf

- 40: Anzeigeabschnitt
- 41: Knopf
- 42: Knopf
- 43: Knopf
- 44: Knopf
- 45: Knopf
- 46: Schaltfeld
- 47: Eingabefeld

- 50: Tabelle
- 51: Zeitspalten
- 52: Ereignisspalte
- 53: Maschinenspalte
- 54: Status/Wertespalte
- 55: Scrollbalken
- 56: Titelzeile
- 57: Knopf
- 58: Knopf
- 59: Symbol

- 60: Dialog
- 61: Knopf
- 62: Knopf
- 63: Knopf

- A: Strecke
- B: Strecke

## Patentansprüche

1. Verfahren zum Betreiben einer Anzeige- und Bedienvorrichtung (1), die mit zumindest zwei Spinnereivorbereitungsmaschinen (A, B) gekoppelt ist, aufweisend die Schritte
• auf einem Anzeigeabschnitt (10, 22) der Vorrichtung (1), Darstellen von Maschinenanzeigeabschnitten in einem Nichthervorhebezustand, von denen jedes jeweils eine der mit der Anzeige- und Bedienvorrichtung (1) gekoppelten Spinnereivorbereitungsmaschinen (A, B) repräsentiert,
• Ermöglichen, einen der Maschinenanzeigeabschnitte mittels eines Bedienabschnitts (12, 22) der Vorrichtung (1) auszuwählen,
• bei Auswahl eines der Maschinenanzeigeabschnitte,
- Darstellen des Maschinenanzeigeabschnitts, der die ausgewählte Spinnereivorbereitungsmaschine (A, B) repräsentiert, in einem ersten Hervorhebezustand, der sich vom Nichthervorhebezustand optisch unterscheidet, und
- Darstellen des bzw. der nicht ausgewählten Maschinenanzeigeabschnitts/e im Nichthervorhebezustand,
• Anzeigen zumindest eines ersten Aktionsauswahlabschnitts (15, 34), der zugeordnete erste Aktionen repräsentiert, die mittels des Bedienabschnitts (10, 20, 30) bei der ausgewählten Spinnereivorbereitungsmaschine (A, B) ausführbar sind,
• bei Auswahl eines des zumindest einen ersten Aktionsauswahlabschnitts (15, 34) mittels des Bedienabschnitts (10, 20, 30), Darstellen eines ersten Aktionsanzeigeabschnitts (2 - 4, 15, 20, 34, 40), dessen Bedienen mittels des Bedienabschnitts (10, 20, 30) das Ausführen der zugeordneten ersten Aktion bei der ausgewählten Spinnereivorbereitungsmaschine (A, B) bewirkt,
• Anzeigen zumindest eines zweiten Aktionsauswahlabschnitts (15, 32, 43), der eine zugeordnete zweite Aktion repräsentiert, die mittels des Bedienabschnitts (10, 20, 30) bei allen gekoppelten Spinnereivorbereitungsmaschinen (A, B) ausführbar ist, und
• bei Auswahl eines des zumindest einen zweiten Aktionsauswahlabschnitts (15, 32, 43) mittels des Bedienabschnitts (10, 20, 30), Darstellen eines zweiten Aktionsanzeigeabschnitts (2 - 4), dessen Bedienen mittels des Bedienabschnitts (10, 20, 30) das Ausführen der zugeordneten zweiten Aktion bei allen gekoppelten Spinnereivorbereitungsmaschinen (A, B) bewirkt.

2. Verfahren gemäß Anspruch 1, ferner aufweisend einen Schritt eines initialen automatischen Auswählen eines der Maschinenanzeigeabschnitte.

3. Verfahren gemäß einem der vorhergehenden Ansprüche, ferner umfassend
• bei Auswahl eines des zumindest einen zweiten Aktionsauswahlabschnitts (15, 32, 43) mittels des Bedienabschnitts (10, 20, 30) einen Schritt eines Darstellens aller Maschinenanzeigeabschnitte gemäß einem zweiten Hervorhebezustand, der sich vom ersten Hervorhebezustand und vom Nichthervorhebezustand unterscheidet, und
• nach Beenden des Bedienens des ausgewählten zweiten Aktionsauswahlabschnitts (15, 32, 43) Zurückkehren zur Darstellung der Maschinenanzeigeabschnitte unmittelbar vor dem Auswählen des zweiten Aktionsauswahlabschnitts (15, 32, 43).

4. Verfahren gemäß einem der vorhergehenden Ansprüche, wobei
• die Maschinenanzeigeabschnitte jeweils ein Abbild der jeweils repräsentierten Spinnereivorbereitungsmaschine (A, B) umfassen,
• der erste Hervorhebezustand ein stilistisches Abbild der jeweiligen Spinnereivorbereitungsmaschine (A, B) ist und
• im Nichthervorhebezustand das Abbild der jeweiligen Spinnereivorbereitungsmaschine (A, B) ausgegraut und/oder zumindest teiltransparent ist.

5. Verfahren gemäß einem der vorhergehenden Ansprüche, wobei die Maschinenanzeigeabschnitte in einem mittigen Bereich (20) des Anzeigeabschnitts (10, 20, 30) der Vorrichtung (1) angeordnet sind.

6. Verfahren gemäß einem der vorhergehenden Ansprüche, wobei der jeweils dargestellte erste und/oder zweite Aktionsanzeigeabschnitt (2 - 4, 41 - 45, 60) die Maschinenanzeigeabschnitte teilweise überdeckt.

7. Verfahren gemäß einem der vorhergehenden Ansprüche, wobei der jeweils dargestellte zumindest eine erste und/oder zweite Aktionsauswahlabschnitt (15, 32, 34) oberhalb oder unterhalb der Maschinenanzeigeabschnitte angeordnet ist.

8. Verfahren gemäß einem der vorhergehenden Ansprüche, aufweisend
• mehrere Berechtigungsebenen,
• einen Schritt des Ermöglichens einem Benutzer, mittels der Vorrichtung (1) eine Berechtigungsebene einstellen zu können,
• vor dem Schritt des Anzeigens des ersten oder zweiten Aktionsauswahlanzeigeabschnitts (2 - 4, 15, 20, 32, 34, 40, 43), einen Schritt des Auswählens ausführbarer erster und/oder zweiter Aktionen auf Basis der eingestellten Berechtigungsebene, und
• Deaktivieren oder Unterdrücken der Anzeige derjenigen Aktionsanzeigeabschnitte, deren zugeordnete erste bzw. zweite Aktionen der eingestellten Berechtigungsebene nicht ausführbar sind.

9. Verfahren gemäß einem der vorhergehenden Ansprüche, wobei das Verfahren computerimplementiert ist.

10. Computerlesbares Medium, das durch einen Prozessor ausführbare Befehle aufweist, um einem Prozessor die Ausführung eines Verfahrens gemäß einem der vorhergehenden Ansprüche zu ermöglichen.

11. System, umfassend
• zumindest zwei Spinnereivorbereitungsmaschinen (A, B),
• eine mit den zumindest zwei Spinnereivorbereitungsmaschinen (A, B) gekoppelte Anzeige- und Bedienvorrichtung (1), gestaltet, eine Bedienung der zumindest zwei Spinnereivorbereitungsmaschinen (A, B) zu ermöglichen, und
• eine Steuerungseinrichtung, gestaltet, die Anzeige- und Bedienvorrichtung (1) gemäß einem Verfahren gemäß einem der Ansprüche 1 bis 9 zu betreiben.

## Claims

1. A method for operating a display and operator device (1), which is coupled to at least two spinning preparation machines (A, B), including the following steps
• on a display section (10, 22) of the device (1), illustrating machine display sections in a non-highlighting condition, each one of them respectively representing one of the spinning preparation machines (A, B) coupled to the display and operator device (1),
• allowing for selecting one of the machine display sections by means of an operator section (12, 22) of the device (1),
• upon selection of one of the machine display sections,
- illustrating the machine display section, which represents the selected spinning preparation machine (A, B), in a first highlighting condition, which is visually different from the non-highlighting condition, and
- illustrating the one, respectively the non-selected machine display section/s in the non-highlighting condition,
• displaying at least one first action selection section (15, 34), which represents associated first actions, which are executable at the selected spinning preparation machine (A, B) by means of the operator section (10, 20, 30),
• upon selection of one of the at least one first action selection section (15, 34) by means of the operator section (10, 20, 30), illustrating a first action display section (2 to 4, 15, 20, 34, 40), the operation thereof by means of the operator section (10, 20, 30) causing the execution of the associated first action at the selected spinning preparation machine (A, B),
• displaying at least one second action selection section (15, 32, 43), which represents an associated second action, which is executable by means of the operator section (10, 20, 30) at all coupled spinning preparation machines (A, B), and
• upon selection of one of the at least one second action selection section (15, 32, 43) by means of the operator section (10, 20, 30), illustrating a second action display section (2 to 4), the operating thereof by means of the operator section (10, 20, 30) causing the execution of the associated second action at all coupled spinning preparation machines (A, B).

2. The method according to claim 1, furthermore including a step of an initial automatic selection of one of the machine display sections.

3. The method according to any of the preceding claims, furthermore comprising
• upon selecting one of the at least one second action selection section (15, 32, 43) by means of the operator section (10, 20, 30), a step of illustrating all machine display sections according to a second highlighting condition, which is different from the first highlighting condition and from the non-highlighting condition, and
• upon ending the operating of the selected second action selection section (15, 32, 43), returning to the illustration of the machine display sections directly prior to selecting the second action selection section (15, 32, 43).

4. The method according to any of the preceding claims, wherein
• the machine display sections respectively comprise a depiction of the respectively represented spinning preparation machine (A, B),
• the first highlighting condition is a stylistic depiction of the respective spinning preparation machine (A, B), and
• in the non-highlighting condition, the depiction of the respective spinning preparation machine (A, B) is greyed and/or at least partially transparent.

5. The method according to any of the preceding claims, wherein the machine display sections are disposed in a central area (20) of the display section (10, 20, 30) of the device (1).

6. The method according to any of the preceding claims, wherein the respectively illustrated first and/or second action display section (2 to 4, 41 to 45, 60) partiallly covers the machine display sections.

7. The method according to any of the preceding claims, wherein the respectively illustrated at least one first and/or second action selection section (15, 32, 34) is disposed above or below the machine display sections.

8. The method according to any of the preceding claims, including
• several authorization levels,
• a step of allowing a user to be able to adjust an authorization level by means of the device (1),
• prior to the step of displaying the first or second action selection display section (2 to 4, 15, 20, 32, 34, 40, 43), a step of selecting executable first and/or second actions based on the set authorization level, and
• deactivating or suppressing the display of those action display sections, for which the associated first, respectively second actions of the set authorization level are not executable.

9. The method according to any of the preceding claims, wherein the method is computer-implemented.

10. A computer readable medium, including instructions executable by a processor for allowing a processor to perform a method according to any of the preceding claims.

11. A system, comprising
• at least two spinning preparation machines (A, B),
• a display and operator device (1) coupled to the at least two spinning preparation machines (A, B), configured to allow for an operation of the at least two spinning preparation machines (A, B), and
• a control apparatus, configured to operate the display and operator device (1) according to a method according to any of the claims 1 to 9.

## Revendications

1. Procédé pour opérer un dispositif d'affichage et de commande (1), lequel est accouplé à au moins deux machines pour la préparation à la filature (A, B), comprenant les étapes suivantes
• sur une section d'affichage (10, 22) du dispositif (1), illustrer des sections d'affichage de machines en un état de non mise en évidence, chacune des sections représentant respectivement une des machines pour la préparation à la filature (A, B) accouplées au dispositif d'affichage et de commande (1),
• permettre de sélectionner une des sections d'affichage de machines au moyen d'une section de commande (12, 22) du dispositif (1),
• lors de la sélection d'une des sections d'affichage de machines,
- illustrer la section d'affichage de machines, qui représente la machine pour la préparation à la filature (A, B) sélectionnée, dans un premier état de mise en évidence, qui est visuellement différent de l'état de non mise en évidence, et
- illustrer en état de non mise en évidence la, respectivement les sections d'affichage de machines non-sélectionnées,
• afficher au moins une première section de sélection d'action (15, 34), qui représente des premières actions associées, qui sont exécutables au moyen de la section de commande (10, 20, 30) sur la machine pour la préparation à la filature (A, B) sélectionnée,
• lors de la sélection d'une desdites au moins une première section de sélection d'action (15, 34) au moyen de la section de commande (10, 20, 30), illustrer une première section d'affichage d'action (2 à 4, 15, 20, 34, 40), dont la commande au moyen de la section de commande (10, 20, 30) effectue l'exécution de la première action associée sur la machine pour la préparation à la filature (A, B) sélectionnée,
• afficher au moins une deuxième section de sélection d'action (15, 32, 43), laquelle représente une deuxième action associée, qui est exécutable au moyen de la section de commande (10, 20, 30) sur toutes les machines pour la préparation à la filature (A, B) accouplées, et
• lors de la sélection d'une desdites au moins une deuxième section de sélection d'action (15, 32, 43) au moyen de la section de commande (10, 20, 30), illustrer une deuxième section d'affichage d'action (2 à 4), dont la commande au moyen de la section de commande (10, 20, 30) effectue l'exécution de la deuxième action associée sur toutes les machines pour la préparation à la filature (A, B) accouplées.

2. Procédé selon la revendication 1, comprenant par ailleurs une étape de sélection automatique initiale d'une des sections d'affichage de machines.

3. Procédé selon l'une des revendications précédentes, comportant par ailleurs
• lors de la sélection d'une de ladite au moins une deuxième section de sélection d'action (15, 32, 43) au moyen de la section de commande (10, 20, 30), une étape d'illustration de toutes les sections d'affichage de machines selon un deuxième état de mise en évidence, qui est différent du premier état de mise en évidence et de l'état de non mise en évidence, et
• après la terminaison de commande de ladite deuxième section de sélection d'action (15, 32, 43) sélectionnée, retourner à l'illustration des sections d'affichage de machines directement avant la sélection de la deuxième section de sélection d'action (15, 32, 43).

4. Procédé selon l'une des revendications précédentes, dans lequel
• les sections d'affichage de machines comportent respectivement une image de ladite machine pour la préparation à la filature (A, B) respectivement représentée,
• le premier état de mise en évidence est une image stylistique de la machine pour la préparation à la filature (A, B) respective, et
• dans l'état de non mise en évidence, l'image de la machine pour la préparation à la filature (A, B) respective est grisée et/ou au moins partiellement transparente.

5. Procédé selon l'une des revendications précédentes, dans lequel les sections d'affichage de machines sont agencées dans une région centrale (20) de la section d'affichage (10, 20, 30) du dispositif (1).

6. Procédé selon l'une des revendications précédentes, dans lequel ladite première et/ou deuxième section/s d'affichage d'action (2 à 4, 41 à 45, 60) respectivement illustrée/s recouvre/nt partiellement les sections d'affichage de machines.

7. Procédé selon l'une des revendications précédentes, dans lequel ladite au moins une première et/ou deuxième section/s de sélection d'action (15, 32, 34) respectivement illustrée(s) sont agencées/est agencée au-dessus ou en-dessous des sections d'affichage de machines.

8. Procédé selon l'une des revendications précédentes, comprenant
• plusieurs niveaux d'autorisation,
• une étape de permission à un utilisateur de pouvoir ajuster un niveau d'autorisation au moyen du dispositif (1),
• avant l'étape d'affichage de la première ou deuxième section d'affichage de sélection d'action (2 à 4, 15, 20, 32, 40, 43), une étape de sélection de premières et/ou deuxièmes actions exécutables sur la base du niveau d'autorisation réglé, et
• désactiver ou supprimer l'affichage desdites sections d'affichage d'action, dont lesdites premières, respectivement deuxièmes actions associées du niveau d'autorisation réglé ne sont pas exécutables.

9. Procédé selon l'une des revendications précédentes, dans lequel le procédé est mis en oeuvre par ordinateur.

10. Support lisible par ordinateur, lequel comprend des instructions exécutables par un processeur, pour permettre au processeur l'exécution d'un procédé selon l'une des revendications précédentes.

11. Système, comportant
• au moins deux machines pour la préparation à la filature (A, B),
• un dispositif d'affichage et de commande (1) accouplé auxdites au moins deux machines pour la préparation à la filature (A, B), aménagé pour permettre une commande desdites au moins deux machines pour la préparation à la filature (A, B), et
• un appareil de contrôle aménagé à opérer le dispositif d'affichage et de commande (1) selon un procédé selon l'une des revendications 1 à 9.
